# DEMANDE DE BREVET EUROPEEN

(11) **EP 4 459 129 A1**
(43) Date de publication de la demande: **06.11.2024**
(21) Numéro de dépôt: 23171475.9
(22) Date de dépôt: 04.05.2023
(51) Int. Cl.: F04D 17/12, F04D 29/051, F04D 29/057, F04D 29/053, B23B 5/48, F16C 17/02, F16C 17/04

(54) **PROCÉDÉ D'USINAGE DE NERVURES OU DE RAINURES D'UN ARBRE POUR DES PALIERS À AIR OU À GAZ D'UN COMPRESSEUR**

(71) Demandeur: Belenos Clean Power Holding AG, 2502 Bienne (CH)
(72) Inventeur: GASHI, Rexhep, 1762 Givisiez (CH)
(74) Mandataire: ICB SA

(57) **Abrégé**

L'invention se rapporte à un procédé d'usinage de nervures ou rainures sur un arbre (7) avec un palier axial à air ou à gaz (24) faisant partie de l'arbre. L'arbre peut être mis en rotation autour d'un axe longitudinal (A-A) d'un compresseur centrifuge. Selon le procédé, toutes les nervures ou rainures (32, 24a) sont obtenues sur une portion à usiner de l'arbre et du palier axial de l'arbre, par déplacement de l'arbre ou d'au moins un porte-outil muni d'un outil d'usinage dans une direction longitudinale d'usinage, en une fois par l'outil d'usinage effectuant des mouvements de va-et-vient avec une position d'usinage en contact et avec une position sans contact avec l'arbre ou le palier axial de l'arbre du début à la fin de la portion ou face à usiner. Les mouvements de va-et-vient de l'outil d'usinage sont synchronisés à la programmation sinusoïdale effectuée dans la machine d'usinage, ainsi qu'à l'agencement désiré et programmé des nervures ou rainures à réaliser.

## Description

### Domaine de l'invention

L'invention se rapporte à un procédé d'usinage de nervures ou rainures d'un arbre pour des paliers à air ou à gaz d'un compresseur centrifuge de fluide à haute vitesse. Le compresseur est à deux étages, et comprend un carter avec une entrée de fluide et une sortie de fluide comprimé et renferme un arbre monté en rotation autour d'un axe longitudinal. Une première roue de compression et une seconde roue de compression sont montées dos à dos sur l'arbre, la première roue de compression constituant un premier étage de compression et la seconde roue de compression constituant un second étage de compression. Le compresseur centrifuge comprend encore un moteur, de préférence électrique synchrone, positionné entre la première roue de compression et la seconde roue de compression et agencé pour mettre en rotation l'arbre. Au moins un palier axial à air ou à gaz fait partie de l'arbre et est disposé à une extrémité de l'arbre. De plus, un palier radial avant à air ou à gaz peut être monté sur une première extrémité de l'arbre et un palier radial arrière à air ou à gaz peut être monté sur une seconde extrémité de l'arbre.

### Arrière-plan de l'invention

Des compresseurs de fluide sont généralement appelés des turbocompresseurs ou compresseurs centrifuges. Ils comprennent un stator et un rotor formant un moteur synchrone à aimant permanent (moteur brushless). Ils peuvent atteindre de très hautes vitesses, telles que 100 000 à 500 000 tours/minute. Le moteur entraîne les roues de compression à régime élevé, où les roues de compression compriment le fluide. Le fluide peut être de l'air, un gaz, un réfrigérant ou tout autre fluide approprié. L'utilisation de deux roues de compression permet de comprimer le fluide deux fois plus.

Ces compresseurs peuvent être utilisés par exemple dans un système CVCA (chauffage, ventilation, climatisation et conditionnement d'air) mobile avec un gaz frigorigène comme dans les véhicules électriques, hybrides ou à hydrogène. Ces compresseurs peuvent également être utilisés dans un système immobile avec un gaz frigorigène comme une pompe à chaleur.

Ces compresseurs comprennent généralement un premier circuit pour la circulation du fluide à comprimer et un second circuit pour la circulation d'un liquide de refroidissement utilisé pour refroidir le compresseur, et plus particulièrement le moteur et les paliers à air ou à gaz supportant l'arbre du moteur d'une part et les composants électroniques d'autre part. En effet, la rotation à vitesse élevée du moteur entraîne un échauffement très important, de sorte que les éléments du compresseur doivent être refroidis pour ne pas être endommagés. Ces circuits sont généralement prévus à l'intérieur du compresseur en tant que tel, au moins en ce qui concerne le circuit de refroidissement. Rien n'est prévu pour faciliter l'écoulement de l'air ou le gaz de refroidissement lors du fonctionnement du compresseur notamment à haute vitesse, ce qui constitue un inconvénient. De plus, les paliers à air ou à gaz supportant l'arbre rotor ne sont pas conçus pour supporter l'arbre rotor sans frottement, ce qui génère un échauffement important lorsque le rotor tourne à haute vitesse ce qui constitue un autre inconvénient.

De plus, il est connu de réaliser des rainures ou des nervures au niveau des paliers à air ou à gaz pour un écoulement de l'air ou de gaz, et permettre la création d'une pression et d'un refroidissement. Cependant, les rainures sont réalisées sans agencement particulier par un usinage laser, ce qui constitue un inconvénient, car le temps d'usinage est trop long et ainsi les coûts sont trop élevés.

### Résumé de l'invention

L'invention a notamment pour objectif de pallier les différents inconvénients mentionnés ci-dessus par un procédé pour réaliser rapidement des rainures ou des nervures sur un arbre de rotor pour des paliers à air ou à gaz, dont un palier axial à air ou à gaz fait partie de l'arbre. Lesdites rainures ou nervures sur l'arbre sont agencées de telle manière à vaincre la gravité lorsque l'arbre du compresseur tourne à haute vitesse dans chaque palier et pour permettre d'avoir l'arbre rotor en rotation maintenu sans contact mécanique sur un filet d'air ou de gaz dans les paliers radiaux donc pratiquement sans frottement.

A cet effet, la présente invention concerne un procédé d'usinage de nervures ou rainures sur un arbre destiné à être mis en rotation autour d'un axe longitudinal d'un compresseur centrifuge, et/ou sur un palier axial à air ou à gaz faisant partie de l'arbre, qui comprend les caractéristiques de la revendication indépendante 1.

Des étapes particulières du procédé sont définies dans les revendications dépendantes 2 à 10.

Un avantage du procédé d'usinage des nervures ou rainures sur l'arbre et/ou le palier axial de l'arbre à usiner du compresseur dans une machine d'usinage, réside dans le fait que toutes les nervures ou rainures sont obtenues sur une portion à usiner de l'arbre entraîné en rotation, en une fois par un outil d'usinage effectuant des mouvements de va-et-vient du début à la fin de la portion à usiner de l'arbre. Pour ce faire, les mouvements de va-et-vient de l'outil d'usinage sont synchronisés à la programmation sinusoïdale effectuée dans la machine d'usinage, ainsi qu'à l'agencement désiré des nervures ou rainures à réaliser sur la portion de l'arbre.

Un avantage du procédé d'usinage des nervures ou rainures sur le palier axial de l'arbre à usiner du compresseur dans une machine d'usinage, réside dans le fait que toutes les nervures ou rainures sont obtenues sur une ou deux faces du disque du palier axial de l'arbre entraîné en rotation,

Durant l'usinage de l'arbre et/ou du palier axial de l'arbre, l'arbre ou le porte-outil portant l'outil d'usinage est également déplacé dans une direction longitudinale d'usinage pendant que l'outil d'usinage effectue les mouvements de va-et-vient.

Les mouvements de va-et-vient de l'outil sont comparés à un oscillateur piézoélectrique où la fréquence d'oscillation peut être modifiée pour accélérer ou ralentir les mouvements de va-et-vient de l'outil selon la programmation effectuée dans la machine d'usinage pour obtenir lesdites nervures ou rainures désirées. Dans les mouvements de va-et-vient, l'outil est une fois en position d'usinage en contact avec l'arbre ou le palier axial de l'arbre et une autre fois sans contact avec l'arbre ou le palier axial de l'arbre.

L'arbre à usiner est fixé à une structure rotor d'un moteur électrique l'entraînant en rotation, et au moins un palier axial à air ou à gaz, qui fait partie de l'arbre et qui est disposé à une première extrémité de l'arbre entre une roue de compression et un palier radial à air ou à gaz. Des nervures ou rainures peuvent être réalisées sur une face ou de préférence sur deux faces du disque du palier axial à air ou à gaz par un outil spécifique à l'usinage des nervures ou rainures du palier axial. Cependant, il peut être utilisé un même outil d'usinage pour l'usinage des nervures ou rainures sur des portions de l'arbre pour les paliers radiaux et sur une ou deux faces du disque du palier axial à air ou à gaz.

Un avantage du procédé d'usinage des nervures ou rainures dans une machine d'usinage, réside dans le fait que les nervures ou rainures sont réalisées très rapidement en moins de 1 minute sur chaque portion à usiner de l'arbre pour les paliers radiaux à air ou à gaz et avec grande précision. Il en est de même pour les rainures ou nervures réalisées sur une ou deux faces du disque du palier axial à air ou à gaz entraîné en rotation. L'outil d'usinage est de plus grande dureté que le matériau de l'arbre ou du palier axial à air ou à gaz.

Comme expliqué ci-dessus, la machine d'usinage peut être programmée pour avoir une synchronisation simultanée de tournage avec l'outil d'usinage selon une programmation sinusoïdale pour obtenir un agencement des nervures ou rainures sur chaque portion à usiner de l'arbre pour chaque palier radial à air ou à gaz, et pour le palier axial à air ou à gaz.

Suite à un tel usinage des nervures ou rainures, qui sont de préférence en forme de V avec un changement d'orientation de chaque nervure ou rainure au centre de chaque portion usinée sur l'arbre, cela permet de maintenir sans contact mécanique l'arbre mis en rotation à haute vitesse dans le compresseur dans les paliers radiaux à air ou à gaz. Donc l'arbre est maintenu dans chaque palier radial pratiquement sans frottement par la pression de l'air ou de gaz passant dans les rainures ou nervures suite à la rotation à haute vitesse de l'arbre. Déjà à partir de 6000 tours/min, la pression d'air ou de gaz dans chaque palier radial aérodynamique est telle que l'arbre n'est plus en contact mécanique avec le palier radial statique évitant de ce fait tout frottement mécanique. Bien entendu plus l'arbre tourne vite, et plus la pression d'air est forte dans le palier radial, ce qui génère automatiquement un frottement d'air ou de gaz plus important.

Les rainures ou nervures sont usinées par la machine d'usinage et l'outil d'usinage selon une programmation sinusoïdale et l'agencement désiré des rainures ou nervures de telle manière à avoir une inversion d'orientation des rainures ou nervures sur l'arbre pratiquement vers la moitié intérieure de chaque palier radial statique placé au-dessus desdites nervures. Cela permet de générer une pression d'air ou de gaz qui peut être de plus en plus importante plus l'arbre tourne vite.

Un tel compresseur centrifuge de fluide à haute vitesse peut tourner à très haute vitesse sans un échauffement excessif grâce à la réalisation des nervures ou rainures dans les paliers radiaux à air ou à gaz.

Un palier axial est également prévu entre la première roue de compression et le premier palier radial. Des rainures ou nervures sont pratiquées en périphérie sous forme de spirales sur une face avant et une face arrière du disque du palier axial. Des films d'air sont générés par les rainures à la rotation de l'arbre pour maintenir l'axe dans une position bien centrée longitudinalement.

### Brève description des dessins

Les buts, avantages et caractéristiques de la présente invention apparaîtront plus clairement dans la description détaillée suivante d'une forme de réalisation de l'invention donnée uniquement à titre d'exemple non limitatif et illustrée par les dessins annexés sur lesquels :

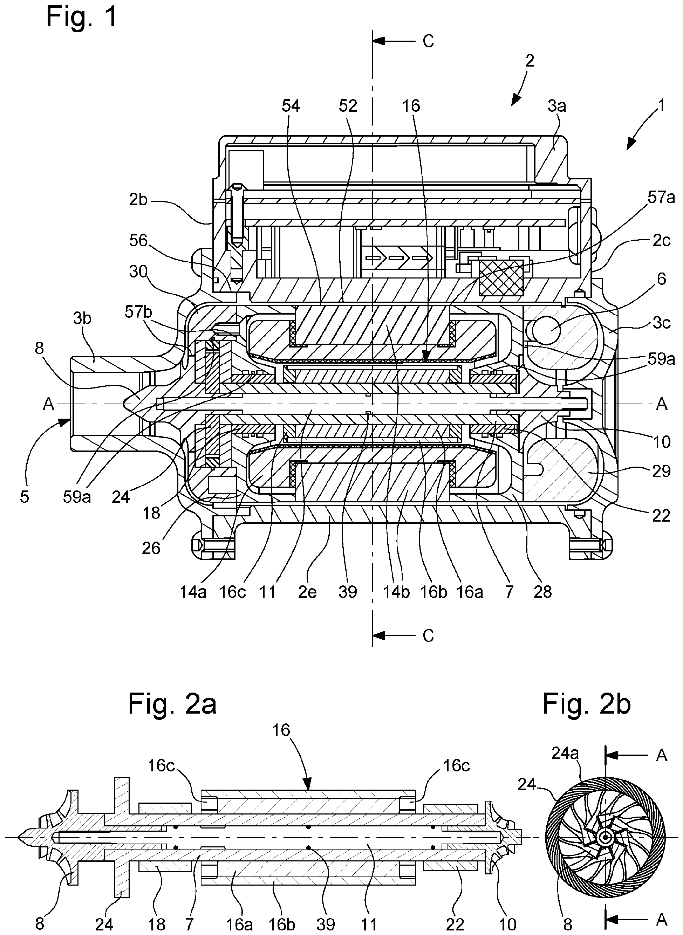

- la figure 1 représente une vue en coupe longitudinale selon l'axe A-A d'un compresseur centrifuge à haute vitesse selon l'invention,
- les figures 2a et 2b représentent une vue en coupe longitudinale selon l'axe A-A de l'arbre avec les roues de compression, les paliers aérodynamiques axial et radiaux et la structure rotor à aimants permanents, et une vue en plan du côté de la première roue de compression et le palier axial faisant partie de l'arbre selon l'invention,

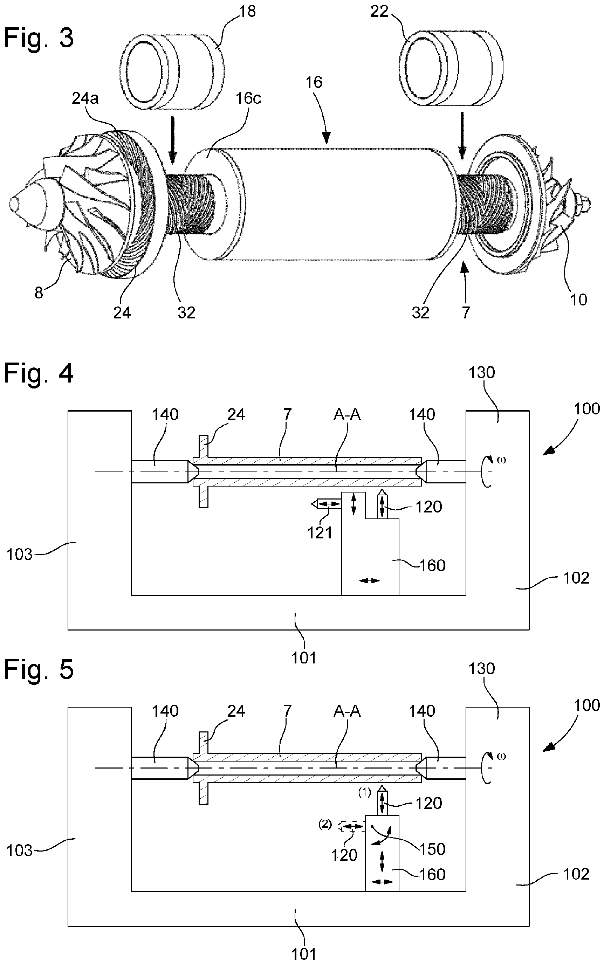

- la figure 3 représente une vue tridimensionnelle de l'ensemble des figures 2a et 2b montrant les rainures ou nervures dans chaque palier radial statique montré en élévation au-dessus de l'arbre selon l'invention et sur le palier axial faisant partie de l'arbre,
- la figure 4 est une vue en coupe longitudinale d'une machine d'usinage pour l'usinage des rainures ou nervures avec un premier d'ensemble d'usinage sur un palier axial à air ou à gaz faisant partie de l'arbre du compresseur et pour l'usinage des rainures ou nervures avec un second ensemble d'usinage sur deux portions de l'arbre pour les paliers radiaux selon l'invention, et
- La figure 5 est une vue en coupe longitudinale d'une variante de réalisation d'une machine d'usinage pour l'usinage des rainures ou nervures avec un seul ensemble d'usinage sur un palier axial à air ou à gaz faisant partie de l'arbre du compresseur et pour l'usinage des rainures ou nervures sur deux portions de l'arbre pour les paliers radiaux selon l'invention.

### Description détaillée de l'invention

Dans la présente description, tous les composants faisant partie du compresseur centrifuge, qui sont bien connus de l'état de la technique, ne sont décrits que sommairement, car l'invention porte essentiellement sur la manière de réaliser des nervures ou des rainures sur deux portions d'un arbre pour être recouvertes respectivement par deux paliers radiaux statiques à air ou à gaz, ou sur un palier axial à air ou à gaz faisant partie de l'arbre.

La figure 1 représente une coupe selon l'axe longitudinal A-A d'un convertisseur centrifuge 1 à haute vitesse. Le convertisseur centrifuge comprend dans un carter 2, un arbre 7 en carbure de tungstène ou en céramique, monté en rotation autour d'un axe longitudinal A-A traversant les faces avant 2b et arrière 2c, une première roue de compression centrifuge 8 et une seconde roue de compression centrifuge 10 montées dos à dos à chaque extrémité de l'arbre 7, ladite première roue de compression 8 constituant un premier étage de compression et ladite seconde roue de compression 10 constituant un second étage de compression. Plus particulièrement, l'arbre 7 est creux dans cette forme d'exécution et renferme une tige filetée 11, à chaque extrémité de laquelle est vissée l'une des roues de compression 8, 10, ce qui permet un montage et un démontage aisés des roues de compression. Ainsi, les deux roues de compressions 8 et 10 sont entrainées sur le même arbre 7, ce qui permet d'avoir un meilleur rendement énergétique et d'éviter un réducteur. L'arrière des roues de compression 8 et 10 comporte un joint labyrinthe afin de maitriser les pressions dans le compresseur et équilibrer les forces axiales.

Le carter 2 renferme également un moteur électrique de préférence synchrone positionné entre la première roue de compression 8 et la seconde roue de compression 10 et agencé pour mettre en rotation l'arbre 7. Le moteur comprend un stator 14 et une structure rotor 16 qui interagissent pour former un moteur électrique synchrone à au moins un aimant permanent 16a (moteur brushless). Plus particulièrement, le stator 14 est formé par une bobine 14a et deux éléments en ferrite 14b, montés fixes par rapport au carter 2. La structure rotor 16 comprend un ou plusieurs aimants permanents 16a rendus solidaire de l'arbre 7, par exemple par collage, et est recouvert d'un chemisage 16b en titane. Des flasques en titane 16c sont fixées (par exemple par collage) aux extrémités latérales du chemisage et permettent d'assurer la résistance du rotor aux forces centrifuges lors de grandes vitesses.

L'arbre 7 est monté en rotation dans le carter 2 autour de son axe longitudinal A-A au moyen d'au moins un palier radial avant 18, un palier radial arrière 22 et un palier axial 24, qui fait intégralement partie de l'arbre 7. Le compresseur centrifuge 1 comprend un support de palier radial avant 26 pour porter le palier radial avant 18, un support de palier radial arrière 28 pour porter le palier radial arrière 22, agencés pour se positionner autour de l'arbre 7, respectivement à l'avant et à l'arrière du moteur. A l'arrière, il est également prévu une volute 29 entre le support de palier radial arrière 28 et le couvercle arrière 3c. La volute 29 comprend l'orifice menant à la sortie tangentielle 6 de fluide, après compression. Il est également prévu un support de palier axial 30 pour porter le palier axial 24 agencé pour se positionner autour de l'arbre 7, entre la première roue de compression 8 et le support de palier radial avant 26. Il est bien évident que le palier axial pourrait être prévu à l'arrière du moteur.

Les paliers sont sans contact, de type aérodynamiques, afin d'engendrer peu de frottement. Ils ne nécessitent pas de lubrification et demandent très peu de maintenance. Plus particulièrement, en référence aux figures 2a, 2b, 3, 4 et 5, le palier axial 24 est un palier aérodynamique. Selon la présente invention, il fait partie de l'arbre 7 en tant que tel, c'est-à-dire qu'il est réalisé en même temps et dans le même matériau de base que l'arbre 7 pour ne former qu'une pièce avec l'arbre 7 sous forme monobloc au terme de sa réalisation.

Ce palier axial est constitué par un disque comportant sur au moins l'une de ses faces des premières rainures 24a, de préférence en spirale sur une zone annulaire en périphérie, agencées pour créer un film d'air. De préférence, le palier axial 24 comprend des rainures ou nervures 24a de préférence en spirale en périphérie du disque de palier axial 24 sur une face avant et sur une face arrière obtenues par un procédé d'usinage expliqué ci-après en référence aux figures 4 et 5. L'orientation des rainures ou nervures 24a peut être différente sur la face avant par rapport à la face arrière ou éventuellement identique. Le palier axial 24 avec ses rainures ou nervures 24a permet de garder l'arbre 7 en rotation de manière centrée longitudinalement par la génération de films d'air de la face avant et de la face arrière. Les paliers radiaux avant 18 et arrière 22 sont des paliers aérodynamiques, et l'arbre 7 présente en regard des paliers radiaux avant 18 et arrière 22 des secondes rainures ou nervures 32 agencées pour créer un film d'air ou de gaz lorsque l'arbre est mis en rotation dans les paliers radiaux à air ou à gaz.

Aux figures 2a et 2b, on peut remarquer encore la première roue de compression centrifuge 8 et la seconde roue de compression centrifuge 10 montées dos à dos à chaque extrémité de l'arbre 7. Une structure rotor 16 à au moins un aimant permanent 16a d'un moteur électrique est montée ou fixée par exemple sur ou dans une partie centrale de l'arbre 7, pour entraîner l'arbre en rotation selon l'axe longitudinal A-A, et un palier axial à air ou à gaz 24 faisant partie de l'arbre 7. Un palier radial avant 18 à air ou à gaz est monté sur une première extrémité de l'arbre 7, et un palier radial arrière 22 à air ou à gaz est monté sur une seconde extrémité de l'arbre 7, comme représenté à la figure 2a.

Comme montré à la figure 3, aux deux extrémités de l'arbre 7 sont une première portion de nervures ou rainures 32 usinées et à l'autre extrémité une seconde portion de rainures ou nervures 32 usinées. La structure rotor 16 à au moins un aimant permanent 16a est fixée sur l'arbre 7 dans une position centrale pour le moteur électrique.

La figure 3 représente une vue tridimensionnelle de l'arbre 7 avec le palier axial 24 à une première extrémité de l'arbre 7. Aux deux extrémités de l'arbre 7, on peut remarquer une première portion de nervures ou rainures 32 avec le premier palier radial 18 montré en élévation au-dessus des nervures ou rainures 32, et une seconde portion de nervures ou rainures 32 avec le second palier radial 22 montré en élévation au-dessus de ces nervures ou rainures 32. Des nervures ou rainures 24a sont représentées également sur une face du disque du palier axial 24 à air ou à gaz faisant partie de l'arbre 7. Les nervures ou rainures 24a d'une certaine profondeur déterminée sont réalisées sur une zone annulaire partant de la périphérie du disque et en direction du centre du disque. Les nervures ou rainures 24a et leur agencement sont programmés notamment dans la machine d'usinage pour activer l'outil d'usinage afin de réaliser toutes les nervures ou les rainures en une fois, c'est-à-dire en déplaçant le porte-outil, ou le disque mis en rotation dans une seule direction d'usinage par exemple de la périphérie du disque au bas de la zone annulaire des nervures ou rainures. En partant par exemple de la périphérie du disque sur une des faces et progressivement des portions de rainures se forment par des mouvements de va-et-vient de l'outil d'usinage en synchronisme avec la machine d'usinage faisant tourner le disque à une vitesse déterminée selon une programmation sinusoïdale.

Avec cette programmation et en combinaison aux mouvements de va-et-vient contrôlés de l'outil d'usinage, chaque début de toutes les rainures 24a est réalisé par la rotation du disque et les mouvements de va-et-vient de l'outil d'usinage. Ceci se répète continuellement pour les portions de rainures ou nervures suivantes en continu de la première portion des rainures et ceci jusqu'au terme ou au bas de la zone annulaire. Avec une telle manière de réaliser les différentes nervures ou rainures 24a sur le disque 24, le temps d'usinage par face à rainures du disque est réalisé en moins d'une minute, ce qui se différencie notablement d'un usinage précédent effectué par faisceau laser.

La machine d'usinage est programmée pour avoir une synchronisation simultanée de tournage de l'arbre 7 avec l'outil d'usinage selon une programmation sinusoïdale pour obtenir un agencement déterminé des nervures ou rainures 32 sur la première portion à usiner de l'arbre 7 pour le palier radial avant à air ou à gaz 18. En partant par exemple du début de la première portion à usiner de l'arbre 7 du côté de sa première extrémité et dans une seule direction d'usinage et jusqu'à la fin de la première portion de la première extrémité de l'arbre 7, toutes les nervures ou rainures 32 sont toutes usinées en une fois, ce qui fait gagner beaucoup de temps d'usinage.

L'agencement déterminé des nervures ou rainures 32 réalisées sur la première portion de la première extrémité de l'arbre 7 est programmé dans la machine d'usinage. Dans une forme d'exécution désiré, les nervures ou les rainures 32 ont chacune une forme de V, c'est-à-dire avec un changement d'orientation en principe depuis le milieu de la première portion de l'arbre 7 à usiner. Cela permet de maintenir sans contact mécanique l'arbre mis en rotation à haute vitesse dans le compresseur dans les paliers radiaux à air ou à gaz. Déjà à partir de 6000 tours/min, la pression d'air ou de gaz dans chaque palier radial aérodynamique est telle que l'arbre n'est plus en contact mécanique avec le palier radial statique évitant de ce fait tout frottement mécanique.

En guise de complément dans la figure 1, le compresseur 1 comprend un carter 2, en aluminium, dont la face supérieure 2a est fermée par un couvercle supérieur 3a et les faces avant 2b et arrière 2c sont fermées respectivement par un couvercle avant 3b et par un couvercle arrière 3c. Les faces latérales 2d du carter sont réunies à leur base pour former un fond 2e présentant, en section transversale, une forme en U.

Le couvercle supérieur 3a est positionné du côté des composants électroniques du compresseur. Ainsi, l'accès aux composants électroniques intégrés dans le compresseur, est facile, l'accès se faisant par le couvercle supérieur 3a. Les couvercles avant et arrière 3b, 3c servent à atteindre l'intérieur du compresseur (moteur, rotor, paliers, etc.). Un joint d'étanchéité est intercalé entre la face supérieure du carter 2 et le couvercle supérieur 3a. Ce joint permet de protéger les composants électroniques contre la poussière et l'humidité.

Le carter 2 présente une entrée de fluide à comprimer 5 prévue sur le couvercle avant 3b et une sortie tangentielle de fluide comprimé 6 prévue sur l'une des faces latérales du carter 2.

A la figure 1, le carter 2 comprend un logement intérieur traversant s'étendant coaxialement à l'axe longitudinal A-A entre la face avant 2b et la face arrière 2c du carter 2 et recevant le support de palier radial avant 26 et le palier radial avant 18, le moteur et sa structure rotor 16 fixée sur l'arbre 7, le support de palier radial arrière 28 et le palier radial arrière 22, la seconde roue de compression 10 et la volute 29. Du côté de la face avant 2b, le logement intérieur est fermé par le couvercle avant 3b qui intègre la première roue de compression 8, le support de palier axial 30 et le palier axial 24. Du côté de la face arrière 2c, le logement intérieur est fermé par le couvercle arrière 3c.

En outre, il est prévu avantageusement au moins un orifice par exemple le point référencé 57a agencé pour permettre au fluide à comprimer circulant dans les canaux d'entrer dans le moteur et de circuler entre le stator 14 et la structure rotor 16 et au moins un orifice par exemple les points référencés 57b agencé pour permettre au fluide à comprimer de sortir du moteur et de rejoindre lesdits canaux après avoir refroidi le moteur.

De même, il est prévu avantageusement au moins un orifice par exemple les points référencés 59a sur la figure 1 agencé pour permettre au fluide à comprimer circulant dans les canaux 54 de circuler à proximité des paliers axial 24, radial avant 18 et radial arrière 22, et au moins un orifice correspondant par exemple aux mêmes points référencés 57b agencé pour permettre au fluide à comprimer de rejoindre lesdits canaux 54 après avoir refroidi lesdits paliers axial 24, radial avant 18 et radial arrière 22.

Ainsi, après être entré dans le premier étage de compression par l'entrée 5, le fluide à comprimer passe dans les canaux 54 à travers les pièces du compresseur situées le long de l'axe longitudinal entre le premier étage de compression et le deuxième étage de compression pour rejoindre le second étage de compression. De ce fait, le fluide à comprimer, lorsqu'il passe entre la paroi intérieure 52 et les éléments en ferrite 14b du moteur, refroidit ce dernier et récupère les calories perdues du moteur afin d'augmenter son efficacité avant d'entrer dans le second étage de compression. De plus, les orifices 57a, 57b, 59a permettent de réaliser une légère déviation du flux afin que le fluide à comprimer circule également entre le stator 14 et la structure rotor 16 et dans les paliers pour refroidir ces éléments et récupérer les pertes de chaleur au niveau du moteur et les pertes de chaleur dues aux frottements dans les paliers.

Le compresseur centrifuge 1 permet d'atteindre des vitesses de rotation très élevées, comprises entre 100 000 tr/min et 500 000 tr/min. Il permet au fluide comprimé dans le premier étage de compression de passer sensiblement dans tout le système pour récupérer toute la chaleur perdue, et notamment la chaleur perdue au niveau du moteur, des paliers et des composants électroniques, afin d'augmenter son efficacité avant d'entrer dans le second étage de compression (la température du fluide à comprimer augmentant, sa pression augmente également). En outre, l'utilisation du seul fluide à comprimer pour refroidir le compresseur, sans l'aide d'un circuit de refroidissement additionnel, ainsi que l'agencement des composants électroniques dans le compresseur pour avoir une électronique intégrée au carter, permettent d'obtenir un compresseur très compact. Le compresseur selon l'invention présente donc un haut régime de rotation et un grand rapport de compression tout en occupant un volume restreint. Par exemple, un compresseur selon l'invention présente un rapport de compression supérieur à 3, et une puissance de l'ordre de 4 kW pour des dimensions L × l × h en cm de l'ordre de 14 x 8 x 11 pour un poids de 1,6 kg seulement.

Par exemple le compresseur selon l'invention peut être utilisé avec de l'air ou du gaz pour l'alimentation de piles à combustible, ou tout autre système qui utilise de l'air comprimé (compresseurs industriels, compresseurs médicaux, de bateaux, etc.).

Avec un gaz frigorigène, le compresseur selon l'invention peut être utilisé dans un système CVCA (chauffage, ventilation, climatisation et conditionnement d'air) mobile, comme dans les véhicules électriques, hybrides ou à hydrogène.

Le compresseur centrifuge peut aussi être utilisé dans un système immobile avec un gaz frigorigène, comme une pompe à chaleur.

Le compresseur centrifuge peut aussi être utilisé avec un gaz naturel.

La figure 4 représente une machine d'usinage 100 pour la réalisation de nervures ou rainures sur des portions de la première extrémité et de la seconde extrémité de l'arbre 7, et également pour la réalisation de nervures ou rainures sur une première face du disque du palier axial 24 faisant partie de l'arbre 7 ou également sur une seconde face du disque du palier axial 24 faisant partie de l'arbre 7.

La machine d'usinage 100 comprend un tour d'usinage 130 avec deux broches 140 pour maintenir l'arbre 7 aux deux extrémités de l'arbre 7 et le faire tourner lors de l'usinage des nervures ou rainures à une vitesse de rotation déterminée ω. Une première broche 140 se trouve sur une première colonne ou paroi verticale 102 de la machine d'usinage 100, alors que la seconde broche 140 se trouve sur une seconde colonne ou paroi verticale 103 à l'opposé de la première colonne ou paroi verticale 102. Les deux parois verticales 102, 103 de la machine d'usinage 100 sont reliées par une base 101 dans laquelle est disposée un moyen de guidage d'au moins un porte-outil 160 susceptible de porter au moins un outil d'usinage 120 ou deux outils d'usinage 120, 121 ou plusieurs autres outils d'usinage différents. Le moyen de guidage du porte-outil 160 dans la base 101 de la machine d'usinage 100, peut être déplacé dans une direction longitudinale A-A sur un ou deux rails de guidage par exemple non représentés dans la base 101.

Pour l'usinage des nervures ou rainures sur la première portion avant ou la seconde portion arrière de l'arbre 7 placé entre les deux broches 140 et entraîné en rotation selon l'axe longitudinal A-A, le porte-outil 160 peut être déplacé parallèlement et de préférence de manière horizontale à l'arbre 7 de manière à placer le premier outil d'usinage 120 dans une position d'usinage comme déjà expliqué ci-dessus. Le premier outil d'usinage 120 est orienté perpendiculairement à la portion de l'arbre 7 de manière à pouvoir effectuer l'usinage des nervures ou des rainures sur une des portions à usiner de l'arbre 7. Puis par la suite le porte-outil 160 est à nouveau déplacé parallèlement à l'arbre 7 pour se diriger vers la seconde portion de l'arbre à usiner.

Dans cette première variante de réalisation de la machine d'usinage 100, il peut être prévu un second outil d'usinage 121 fixé au même porte-outil 160 que le premier outil d'usinage 120, ou à un autre porte-outil non représenté, mais orienté dans une direction perpendiculaire à la direction du premier outil d'usinage. Ce second outil d'usinage 121 peut être utilisé pour aller réaliser l'usinage des nervures ou rainures sur au moins une face du disque du palier axial 24 faisant partie de l'arbre 7. Pour ce faire, le porte-outil 160 est déplacé parallèlement à l'arbre 7 jusqu'au disque du palier axial 24. Une fois positionné à proximité du disque, le second outil d'usinage 121 est entraîné pour l'usinage des nervures ou rainures sur au moins une des faces du disque du palier axial 24.

Il est à noter que pour cette première variante de réalisation de la machine d'usinage, il est préféré d'utiliser un même porte-outil pour les deux outils d'usinage de manière à ne pas avoir de parties en porte-à-faux susceptibles de mener à un manque de précision de l'usinage. Avec un même porte-outil 160, on s'affranchit de toute erreur d'usinage cumulative de deux porte-outils à réglage non uniforme.

Selon une variante de réalisation, les broches 140, qui maintiennent l'arbre 7 en rotation peuvent se déplacer dans une direction longitudinale d'usinage pour la réalisation des nervures ou rainures. Comme précédemment indiqué, l'arbre 7 est sous forme tubulaire de manière à pouvoir être fixé et déplacé dans une direction longitudinale. Avec l'arbre 7 sous forme tubulaire, cela permet aux deux broches 140 d'avoir leur extrémité s'insérer en partie dans le tube intérieur de l'arbre aux deux extrémités de l'arbre pour le maintenir bloqué et le faire tourner à une vitesse de rotation déterminée ω pour l'usinage. Bien entendu, les deux broches 140 avec l'arbre 7 à usiner peuvent bouger dans une direction longitudinale pendant l'opération d'usinage.

Dans cette variante de réalisation, la machine d'usinage 100 comprend encore au moins un porte-outil 160, qui est relié à la structure du tour d'usinage 130. Bien entendu, les dimensions réelles de la machine d'usinage 100 sont présentées plus petites qu'en réalité. Le porte-outil 160 porte un premier outil d'usinage 120 dont la tête d'usinage peut venir en contact de l'arbre 7 pour usiner les rainures ou nervures peut effectuer des mouvements de va-et-vient selon une programmation de la machine d'usinage 100. Au moins l'extrémité de la tête du premier outil d'usinage 120 peut être en diamant pour usiner les nervures ou rainures sur l'arbre 7 en carbure de tungstène ou en céramique. Ceci est effectué pour avoir une synchronisation simultanée de tournage de l'arbre 7 avec le premier outil d'usinage 120 selon une programmation sinusoïdale pour obtenir un agencement déterminé des nervures ou rainures sur les portions à usiner de l'arbre 7 pour chaque palier radial avant ou arrière à air ou à gaz.

Le porte-outil 160 avec le premier outil d'usinage 120 peuvent aussi dans une variante de réalisation être déplacés ensemble dans une direction longitudinale d'usinage à la place de l'arbre 7 pour l'usinage des nervures ou rainures sur l'arbre.

Il peut encore être prévu de modifier la fréquence des mouvements de va-et-vient du premier outil d'usinage 120 selon une programmation effectuée dans la machine d'usinage 100. Notamment, les mouvements de va-et-vient de l'outil d'usinage sont synchronisés par une programmation sinusoïdale effectuée dans la machine d'usinage, ainsi qu'à l'agencement désiré et programmé des nervures ou rainures à réaliser sur la portion de l'arbre 7 et/ou du disque du palier axial 24 de l'arbre 7.

Il est à noter que le palier axial 24 de l'arbre 7 est réalisé avec l'arbre 7 dans un même matériau sous la forme monobloc. L'arbre 7 et le palier axial 24 de l'arbre peuvent donc être réalisés en même temps soit par une opération de moulage en fonction du matériau utilisé, soit de préférence en utilisant au moins un outil d'usinage d'un porte-outil de la machine usinage 100, qui est utilisé par la suite pour l'usinage des rainures ou nervures sur les portions avant et arrière de l'arbre 7. Dans ce cas de figure, il est possible d'utiliser le premier outil d'usinage 120 du porte-outil 160. De plus pour réaliser le palier axial 24 sur une ébauche initiale de l'arbre 7, cette ébauche initiale de l'arbre 7, qui peut être déjà sous forme tubulaire, peut avoir initialement un diamètre correspondant sensiblement au diamètre final externe du palier axial 24 à réaliser. L'ébauche est fixée aux deux broches 140 de la machine usinage 100 pour être entraînée en rotation autour d'un axe longitudinal. Le premier outil d'usinage 120, qui doit être d'un matériau abrasif plus important, plus dur que le matériau de l'ébauche de l'arbre 7, et déplacé d'une première extrémité de l'arbre en rotation à une première position de l'arbre 7 correspondant à la position d'une face du disque du palier axial 24 à réaliser. Dans cette première opération d'usinage, il y a l'ébauche de l'arbre en rotation, ainsi que l'outil d'usinage 120 pour pouvoir retirer une première fine couche de matériau de l'ébauche de l'arbre. Par la suite, plusieurs autres fines couches successives sont retirées de l'arbre en rotation par l'outil d'usinage 120 par déplacement longitudinal de la première extrémité à la première position du palier axial 24 jusqu'à atteindre le diamètre de l'arbre désiré, et ainsi avoir le palier axial 24 réalisé sur l'arbre 7. Si une continuité de l'arbre part d'une seconde position du palier axial à l'extrémité opposée de l'arbre, il doit aussi être effectué l'usinage par retrait de fines couches de l'autre côté de l'ébauche de l'arbre en changeant de sens l'ébauche tubulaire pour fixer l'ébauche de l'arbre aux deux broches 140 dans une direction opposée et répéter les opérations avec l'outil d'usinage 120 sur son porte-outil 160 comme précédemment. Il est ainsi plus facile de changer de sens l'ébauche de l'arbre entre les broches 140, que de devoir déplacer le porte-outil 160 avec l'outil d'usinage 120 d'un autre endroit de la machine à usinage 100.

Bien entendu au terme de la réalisation de l'arbre 7 au diamètre escompté et du palier axial 24, il peut être réalisé l'usinage des nervures ou rainures sur les portions avant et arrière de l'arbre par le premier outil d'usinage 120 relié au porte-outil 160.

Généralement, l'arbre 7 à usiner est en carbure de tungstène ou en céramique. Ainsi l'outil d'usinage 120 comprend généralement une tête d'usinage en diamant. Cela permet de réaliser toutes les nervures ou rainures sur une première portion à usiner de la première extrémité de l'arbre 7 depuis le début de la première portion à la fin de la première portion en une fois par des mouvements de va-et-vient de l'outil d'usinage 120 et déplacement dans une direction longitudinale d'usinage de l'arbre 7 en rotation selon la programmation de la machine d'usinage 100 ou également par déplacement longitudinal du premier porte-outil 160, ou du premier outil 120 dans le porte-outil 160.

Dans cette première forme d'exécution de la machine usinage 100, il doit être prévu un second outil d'usinage 121 monté sur le porte-outil 160 dans une direction perpendiculaire au premier outil d'usinage 120 pour réaliser les nervures ou rainures sur une face du disque du palier axial 24, ou sur les deux faces du disque par un changement de sens de l'arbre 7 fixé entre les deux broches 140.

Il est à noter encore qu'il peut être réalisé l'usinage des nervures ou rainures sur une première portion avant une seconde portion arrière successivement de l'arbre par le premier outil d'usinage 120. Un changement d'orientation des nervures ou rainures peut intervenir au passage de la moitié de la première portion à usiner et de la seconde portion à usiner de l'arbre 7 selon une programmation de la machine d'usinage de manière à obtenir des rainures en forme de V sur la longueur des première et seconde portions usinées dans le but de générer une pression d'air ou de gaz dans un palier radial avant disposé sur la première portion ou dans un palier radial arrière disposé sur la seconde portion lors du fonctionnement du compresseur avec la rotation de l'arbre 7 au-dessus d'une vitesse limite pour ne plus avoir de contact mécanique avec le ou les paliers radiaux avant et arrière.

Pour l'usinage du palier axial 24, qui est sous la forme d'un disque il est utilisé uniquement le second outil d'usinage 121, qui peut être monté sur le porte-outil 160 déplaçable longitudinalement selon l'axe A-A. Les nervures ou rainures et leur agencement sont programmés dans la machine d'usinage 100 pour activer le second outil d'usinage 121 afin de réaliser toutes les nervures ou les rainures en une fois sur une première face du disque en déplaçant l'outil d'usinage, ou le disque mis en rotation dans une seule direction d'usinage de la périphérie du disque au bas de la zone annulaire des nervures ou rainures ou inversement, et par des mouvements de va-et-vient de l'outil d'usinage 121 selon la programmation de la machine d'usinage 100. Les deux faces du disque du palier axial 24 peuvent être usinées par le second outil d'usinage en permutant de sens l'arbre 7 entre les deux broches 140.

Sur une ou les deux faces du disque du palier axial 24, les nervures ou les rainures peuvent être réalisées sous la forme de spirale selon une même orientation sur les deux faces ou deux orientations différentes dans le but de générer des films d'air par les rainures à la rotation de l'arbre 7 pour maintenir l'axe dans une position bien centrée longitudinalement lors du fonctionnement du compresseur centrifuge.

Il est encore à noter qu'aussi bien le premier outil d'usinage 120, que le second outil d'usinage 121 peuvent être déplacés dans le porte-outil 160 dans une première direction ou dans une seconde direction inverse pour venir en contact d'une portion de l'arbre 7 à usiner pour le premier outil d'usinage 120 ou s'en éloigner comme montrer symboliquement par les flèches dans le porte-outil 160 ou dans chacun des outils d'usinage 120, 121.

La figure 5 est reprise en partie de la figure 4 de la machine usinage 100. Cependant dans ce cas de figure, il n'y a qu'un seul porte-outil 160 et également un seul outil d'usinage 120 susceptible d'être orienté ou déplacé en rotation autour d'un axe 150 du porte-outil 160 pour être dans une position indiquée (1) pour l'usinage des nervures ou rainures sur les portions avant et arrière de l'arbre 7, et dans une position indiquée (2) pour l'usinage des nervures ou rainures sur une face ou de préférence deux faces du disque du palier axial 24.

Comme pour le porte-outil 160 montré à la figure 4, ce porte-outil 160 est déplaçable longitudinalement par exemple sur un ou des rails de guidage disposés dans la base 101 de la machine d'usinage 100.

Cette seconde forme d'exécution de la machine usinage 100 semble plus facile d'utilisation que la première forme d'exécution présentée ci-dessus à la figure 4, mais sans être forcément d'une plus grande rapidité pour l'obtention des nervures ou rainures sur les portions de l'arbre 7 et sur le disque du palier axial 24. Tous les éléments présentés dans cette figure 5, qui sont identiques aux éléments décrits en référence à la figure 4 ne sont donc pas répétés. Le porte-outil 160 peut être muni de plus de deux outils d'usinage, mais avec un seul outil d'usinage en fonction pour l'usinage des nervures ou rainures sur une ou deux portions de l'arbre 7 ou sur une face ou deux faces du disque du palier axial 24.

Bien entendu, la présente invention ne se limite pas aux exemples illustrés et est susceptible de diverses variantes et modifications qui apparaîtront de manière évidente à l'homme du métier. D'autres combinaisons sont bien entendues possibles avec déjà ce qui est connu avec le compresseur centrifuge. L'usinage rapide et précis de nervures ou rainures peut être effectué sur d'autres pièces que celles décrites ci-dessus avec des éléments d'usinage équivalents.

## Revendications

1. Procédé d'usinage de nervures ou rainures sur un arbre (7) destiné à être mis en rotation autour d'un axe longitudinal (A-A) d'un compresseur centrifuge (1), et/ou sur un palier axial à air ou à gaz (24) faisant partie de l'arbre (7), une structure rotor (16) à au moins un aimant permanent (16a) d'un moteur électrique étant destinée à être montée sur l'arbre (7) ou dans l'arbre (7) pour entraîner l'arbre en rotation, le compresseur centrifuge (1) comprenant encore un carter (2) présentant une entrée de fluide (5) et une sortie (6) de fluide comprimé, une première roue de compression (8) et une seconde roue de compression (10) destinées à être montées à deux extrémités de l'arbre (7) dans le carter (2), un palier radial avant (18) à air ou à gaz destiné à être monté sur une première extrémité de l'arbre (7), et/ou un palier radial arrière (22) à air ou à gaz destiné à être monté sur une seconde extrémité de l'arbre (7), le procédé d'usinage étant effectué dans une machine d'usinage (100) adaptée pour recevoir l'arbre (7) avec le palier axial (24) à usiner et comprenant un porte-outil (160) avec un outil d'usinage (120, 121) des nervures ou rainures sur au moins une portion de l'arbre (7) ou du palier axial (24) de l'arbre (7),
le procédé étant **caractérisé en ce que** toutes les nervures ou rainures (24a; 32) sont obtenues sur une portion à usiner de l'arbre entraînée en rotation et/ou du disque du palier axial (24) de l'arbre (7), par déplacement de l'arbre (7) et/ou du disque du palier axial (24) de l'arbre (7), ou du porte-outil (160) dans une direction longitudinale d'usinage, en une fois par l'outil d'usinage (120, 121) effectuant des mouvements de va-et-vient avec une position d'usinage en contact avec l'arbre (7) et/ou avec le disque du palier axial (24) de l'arbre (7), et une position sans contact avec l'arbre (7) et/ou avec le disque du palier axial (24) de l'arbre (7), du début à la fin de la portion à usiner avec l'arbre (7) et/ou avec le disque du palier axial (24) de l'arbre (7), et **en ce que** les mouvements de va-et-vient de l'outil d'usinage (120, 121) sont synchronisés à une programmation sinusoïdale effectuée dans la machine d'usinage (100), ainsi qu'à l'agencement désiré et programmé des nervures ou rainures à réaliser sur la portion de l'arbre (7) et/ou du disque du palier axial (24) de l'arbre (7).

2. Procédé d'usinage selon la revendication 1, pour lequel le palier axial à air ou à gaz (24) est réalisé sur l'arbre (7) avant l'usinage des nervures ou rainures (32) sur l'arbre (7).

3. Procédé d'usinage selon la revendication 2, **caractérisé en ce que** le palier axial à air ou à gaz (24) est réalisé en prenant une ébauche d'un arbre (7) de diamètre sensiblement égal au diamètre désiré du palier axial (24) à réaliser, **en ce que** l'ébauche de l'arbre (7) est entraînée en rotation dans la machine d'usinage (100) autour d'un axe longitudinal (A-A), **en ce qu'**un outil d'usinage (120) à matériau abrasif est déplacé d'une extrémité de l'arbre (7) en rotation à une première position de l'arbre (7) correspondant à la position d'une face du disque du palier axial (24) à réaliser de manière à retirer une fine couche de matériau de l'arbre (7), **en ce que** plusieurs fines couches successives sont retirées de l'arbre (7) en rotation par l'outil d'usinage (120) par déplacement longitudinal de la première extrémité à la première position du palier axial (24) jusqu'à atteindre le diamètre de l'arbre (7) désiré.

4. Procédé d'usinage selon la revendication 3, **caractérisé en ce qu'**une même opération d'usinage successif pour le retrait de fines couches est effectuée depuis l'extrémité opposée de l'arbre (7) jusqu'à une seconde position du palier axial correspondant à la seconde face du palier axial (24).

5. Procédé d'usinage selon la revendication 1, pour lequel l'arbre (7) à usiner est en carbure de tungstène ou en céramique, et pour lequel la tête de l'outil d'usinage (120) est en diamant, **caractérisé en ce que** l'arbre (7) est entraîné en rotation durant l'usinage autour de l'axe longitudinal (A-A), **en ce que** toutes les nervures ou rainures (32) sont obtenues sur une première portion à usiner de la première extrémité de l'arbre (7) depuis le début de la première portion à la fin de la première portion en une fois par des mouvements de va-et-vient de l'outil d'usinage (120) et déplacement dans une direction longitudinale d'usinage de l'arbre (7) en rotation selon la programmation de la machine d'usinage (100).

6. Procédé d'usinage selon la revendication 1, pour lequel l'arbre (7) à usiner est en carbure de tungstène ou en céramique, et pour lequel la tête de l'outil d'usinage (120) est en diamant, **caractérisé en ce que** l'arbre (7) est entraîné en rotation durant l'usinage autour de l'axe longitudinal (A-A), **en ce que** toutes les nervures ou rainures (32) sont obtenues sur une seconde portion à usiner de la seconde extrémité de l'arbre (7) depuis le début de la seconde portion à la fin de la seconde portion en une fois par des mouvements de va-et-vient de l'outil d'usinage (120) et déplacement dans une direction longitudinale d'usinage du porte-outil (160) selon la programmation de la machine d'usinage (100).

7. Procédé d'usinage selon l'une des revendications 5 et 6, **caractérisé en ce que** lors de l'usinage des nervures ou rainures (32), un changement d'orientation des nervures ou rainures (32) intervient au passage de la moitié de la première portion à usiner de la première extrémité de l'arbre (7) et au passage de la moitié de la seconde portion à usiner de la seconde extrémité de l'arbre (7) selon une programmation de la machine d'usinage de manière à obtenir des rainures en forme de V sur la longueur des première et seconde portions usinées dans le but de générer une pression d'air ou de gaz dans un palier radial avant (18) disposé sur la première portion ou dans un palier radial arrière (22) disposé sur la seconde portion lors du fonctionnement du compresseur avec la rotation de l'arbre (7) au-dessus d'une vitesse limite pour ne plus avoir de contact mécanique avec le ou les paliers radiaux avant (18) et arrière (22).

8. Procédé d'usinage selon la revendication 1, pour lequel la pièce à usiner est le palier axial à air ou à gaz (24) sous la forme d'un disque faisant partie de l'arbre (7) sous forme monobloc, **caractérisé en ce que** les nervures ou rainures (24a) et leur agencement sont programmés dans la machine d'usinage (100) pour activer l'outil d'usinage (120, 121) afin de réaliser toutes les nervures ou les rainures en une fois sur une première face du disque en déplaçant l'outil d'usinage, ou le disque mis en rotation dans une seule direction d'usinage de la périphérie du disque au bas de la zone annulaire des nervures ou rainures ou inversement, et par des mouvements de va-et-vient de l'outil d'usinage (120, 121) selon la programmation de la machine d'usinage (100).

9. Procédé d'usinage selon la revendication 8, **caractérisé en ce que** toutes les nervures ou les rainures (24a) sont réalisées en une fois sur une seconde face du disque en déplaçant l'outil d'usinage, ou le disque mis en rotation dans une seule direction d'usinage de la périphérie du disque au bas de la zone annulaire des nervures ou rainures (24a) ou inversement, et par des mouvements de va-et-vient de l'outil d'usinage (120, 121) selon la programmation de la machine d'usinage (100).

10. Procédé d'usinage selon la revendication 9, **caractérisé en ce que** toutes les nervures ou les rainures (24a) sont réalisées sous forme de spirale selon une même orientation sur les deux faces ou deux orientations différentes dans le but de générer des films d'air par les rainures à la rotation de l'arbre (7) pour maintenir l'axe dans une position bien centrée longitudinalement lors du fonctionnement du compresseur centrifuge (1).
